# EUROPÄISCHE PATENTANMELDUNG

(11) **EP 4 815 378 A1**
(43) Veröffentlichungstag der Anmeldung: **30.09.2026**
(21) Anmeldenummer: 26166834.7
(22) Anmeldetag: 23.03.2026
(51) Int. Cl.: H04L 12/28, H04L 41/0806, G07C 9/00, H04M 11/02, H04N 7/18, H04W 4/33

(54) **VERFAHREN, MOBILES ENDGERÄT UND SYSTEM ZUR LOKALEN KONFIGURATION EINER HAUSKOMMUNIKATIONSANLAGE**

(30) Priorität: 24.03.2025 DE 102025111250
(71) Anmelder: Horst Siedle GmbH & Co. KG., 78120 Furtwangen (DE)
(72) Erfinder: MICHEL, Dieter, 78112 St. Georgen im Schwarzwald (DE); RINGGELER, Christian, 79787 Lauchringen (DE)
(74) Vertreter: Isarpatent

(57) **Zusammenfassung**

Die Erfindung betrifft ein Verfahren und ein mobiles Endgerät zur lokalen Konfiguration einer Hauskommunikationsanlage mit einer Mehrzahl physischer Hauskommunikationsendgeräte. Eine eindeutige Identifikation eines Hauskommunikationsendgeräts wird mittels einer mobilen Anwendung auf einem mobilen Endgerät erfasst. In der Anwendung erfolgt die Konfiguration der erfassten Komponente, wobei eine Konfiguration erstellt wird. Diese wird an die Hauskommunikationsendgeräte der Hauskommunikationsanlage übertragen, sodass die Hauskommunikationsanlage gemäß der Konfiguration eingerichtet wird. Die Übertragung erfolgt drahtlos, insbesondere über WLAN oder Bluetooth. Optional kann die Konfiguration mit einer zentralen Datenverarbeitungseinheit synchronisiert werden, um eine spätere Fernkonfiguration oder Wartung zu ermöglichen.

## Beschreibung

### GEBIET DER ERFINDUNG

Die vorliegende Erfindung betrifft die Konfiguration von Hauskommunikationsanlagen und insbesondere ein Verfahren sowie ein mobiles Endgerät zur lokalen Konfiguration einer Hauskommunikationsanlage mittels einer mobilen Anwendung. Zudem betrifft die Erfindung ein System, das neben der Hauskommunikationsanlage und dem mobilen Endgerät auch eine zentrale Datenverarbeitungseinheit umfasst.

### TECHNISCHER HINTERGRUND

Die vorliegende Erfindung bezieht sich auf das Gebiet der Hauskommunikation als Teil der Hausautomatisierung. Die Hausautomatisierung befindet sich im Umfeld des intelligenten Wohnens, welches Lösungen im privaten oder geschäftlichen Wohn- und Arbeitsbereich bezeichnet, die auf die speziellen Bedürfnisse der Bewohner von privaten Wohnhäusern, Wohnblocks oder Geschäftshäuser ausgerichtet sind, bei denen Geräte, Systeme und Technologien eingesetzt werden, die mehr Effizienz, Komfort, Wirtschaftlichkeit, Flexibilität und Sicherheit schaffen.

Ein Aspekt der Hausautomatisierung bezieht sich auf die Hauskommunikation mittels entsprechender Hauskommunikationsendgeräte oder (Gegen-)Sprechanlagen. Moderne Hauskommunikationsanlagen umfassen typischerweise eine Vielzahl von verschiedenen Hauskommunikationsendgeräten, die miteinander über ein Verbindungsnetzwerk, wie z.B. Ethernet oder ein Bussystem, gekoppelt sind. Man unterscheidet dabei zwischen so genannten Innenstationen, die in einem geschützten Bereich innerhalb des Hauses oder einer entsprechenden Wohnungseinheit angeordnet sind, und so genannten Türstationen oder Außenstationen, die im öffentlichen Bereich vor oder unmittelbar an der Haus- oder Gebäudetür angebracht sind und über welche Besucher mit Hausbewohnern in kommunikative Verbindung treten können. Diese Hauskommunikationsendgeräte weisen meist eine Klingel oder ein Klingeltastenfeld, einen Türöffner, eine Gegensprechanlage, eine Kamera und ein Display auf, über welche eine bidirektionale Kommunikation zwischen Besucher und Haus- oder Wohnungsbesitzer ermöglicht wird. Derartige Hauskommunikationsanlagen sind allgemein bekannt, so dass darauf nicht näher eingegangen werden muss.

Hauskommunikationsanlagen bestehen aus einer Vielzahl physischer Hauskommunikationsendgeräte, die typischerweise über eine Netzwerkverbindung miteinander gekoppelt sind. Eine Konfiguration der Hauskommunikationsanlage ist erforderlich, um die Funktionalitäten der einzelnen Hauskommunikationsendgeräte festzulegen, beispielsweise welche Türstation mit welchen Innenstationen kommuniziert oder welche Autorisierungsmechanismen für den Zugang verwendet werden.

Traditionell erfolgt die Konfiguration entweder direkt an den einzelnen physischen Hauskommunikationsendgeräten durch physische Eingaben oder über eine zentrale Datenverarbeitungseinheit, die die Konfigurationsdaten verwaltet und an die Hauskommunikationsanlage überträgt. Während diese Ansätze in vielen Fällen praktikabel sind, ergeben sich in der Praxis Herausforderungen, insbesondere wenn Installationen oder Wartungsarbeiten vor Ort durchgeführt werden müssen.

Ein wesentliches Problem ist, dass für Änderungen oder Anpassungen der Konfiguration oft eine aktive Netzwerkverbindung zwischen der Hauskommunikationsanlage und der zentralen Datenverarbeitungseinheit erforderlich ist. Insbesondere bei Neubauten oder bei Anlagen, die sich an Standorten mit eingeschränkter Internetverbindung befinden, kann dies problematisch sein. Zudem erfordert eine Konfiguration über eine zentrale Einheit häufig, dass sich der Installateur oder Techniker an einem räumlich entfernten Arbeitsplatz befindet, anstatt direkt an der Hauskommunikationsanlage Anpassungen vorzunehmen.

### ZUSAMMENFASSUNG DER ERFINDUNG

Um diese Herausforderungen zu lösen, wäre es wünschenswert, eine Lösung bereitzustellen, die eine flexible und lokale Konfiguration der Hauskommunikationsanlage ermöglicht, ohne dass eine permanente Verbindung zur zentralen Datenverarbeitungseinheit erforderlich ist. Eine solche Lösung sollte insbesondere die Möglichkeit bieten, einzelne physische Hauskommunikationsendgeräte vor Ort zu identifizieren, zu konfigurieren und die Konfigurationsdaten entweder direkt an die Hauskommunikationsanlage oder später bei bestehender Internetverbindung an die zentrale Datenverarbeitungseinheit zu übermitteln.

Die vorliegende Erfindung schafft ein Verfahren zur lokalen Konfiguration einer Hauskommunikationsanlage, ein mobiles Endgerät zur Durchführung dieses Verfahrens sowie ein System zur Konfiguration einer Hauskommunikationsanlage mit den Merkmalen der unabhängigen Patentansprüche. Weitere vorteilhafte Ausführungsformen sind Gegenstand der abhängigen Ansprüche.

Demgemäß ist vorgesehen:
- Ein Verfahren zur lokalen Konfiguration einer Hauskommunikationsanlage. Das Verfahren umfasst das Erfassen einer eindeutigen Identifikation eines physischen Hauskommunikationsendgeräts der Hauskommunikationsanlage mittels eines mobilen Endgeräts, das Durchführen einer Konfiguration dieses Hauskommunikationsendgeräts in einer mobilen Anwendung sowie das Erstellen einer Konfiguration auf Basis der vorgenommenen Einstellungen. Bei dieser Konfiguration kann es sich beispielsweise um eine Konfigurationsdatei handeln. Die Konfiguration kann anschließend auf die miteinander vernetzten physischen Hauskommunikationsendgeräte der Hauskommunikationsanlage übertragen werden.
- Ein mobiles Endgerät zur lokalen Konfiguration einer Hauskommunikationsanlage mit einer Mehrzahl physischer Hauskommunikationsendgeräte. Das mobile Endgerät umfasst eine Eingabeeinrichtung zur Erfassung einer eindeutigen Identifikation einer physischen Komponente, eine Verarbeitungseinheit zur Generierung und Speicherung von Konfigurationsdaten basierend auf Benutzereingaben sowie eine Datenübertragungseinheit zur Übermittlung der Konfigurationsdaten an die physischen Hauskommunikationsendgeräte der Hauskommunikationsanlage.
- Ein System zur Konfiguration einer Hauskommunikationsanlage, das eine Mehrzahl physischer Hauskommunikationsendgeräte, ein mobiles Endgerät und eine zentrale Datenverarbeitungseinheit umfasst. Das mobile Endgerät ist dabei dazu ausgebildet, Konfigurationsdaten für die physischen Hauskommunikationsendgeräte zu erfassen, zu bearbeiten und entweder direkt an die Hauskommunikationsanlage oder an die zentrale Datenverarbeitungseinheit zu übertragen.

Die Konfiguration einer Hauskommunikationsanlage ist in herkömmlichen Systemen oft mit einem hohen manuellen Aufwand verbunden. Insbesondere erfordert die Einrichtung und Anpassung der einzelnen Hauskommunikationsendgeräte in vielen Fällen eine direkte Konfiguration vor Ort über spezielle Installationsgeräte oder über die Benutzerschnittstelle einer bereits installierten Anlage. Dies setzt voraus, dass entweder eine Verbindung zur zentralen Steuerungseinheit besteht oder dass ein Techniker direkt an der Anlage arbeitet, was die Flexibilität und Effizienz der Installation erheblich einschränken kann. Ein weiteres Problem besteht darin, dass Konfigurationsänderungen oder Fehlerkorrekturen häufig nur durch eine erneute physische Verbindung zur Hauskommunikationsanlage vorgenommen werden können, wodurch insbesondere bei komplexen oder dezentral installierten Systemen zusätzlicher Aufwand entsteht.

Die zugrunde liegende Idee der vorliegenden Erfindung besteht darin, diesen Prozess durch eine mobile Anwendung auf einem mobilen Endgerät zu optimieren. Das Konzept ermöglicht eine lokale, flexible und einfache Konfiguration, ohne dass eine permanente Verbindung zur Hauskommunikationsanlage oder zur zentralen Datenverarbeitungseinheit erforderlich ist. Dadurch können Konfigurationsänderungen auch direkt vor Ort vorgenommen werden, selbst wenn keine Netzwerkverbindung besteht. Dies erleichtert insbesondere die Erstinstallation sowie spätere Anpassungen oder Wartungsmaßnahmen erheblich.

Die Lösung gemäß der Erfindung sieht vor, dass ein mobiles Endgerät genutzt wird, um die einzelnen physischen Hauskommunikationsendgeräte einer Hauskommunikationsanlage zu erfassen und direkt über eine mobile Anwendung zu konfigurieren. Die Konfigurationsdaten werden anschließend in einer Konfiguration, beispielsweise einer Konfigurationsdatei, gespeichert, die entweder direkt an die physischen Hauskommunikationsendgeräte der Hauskommunikationsanlage übertragen oder zu einem späteren Zeitpunkt an eine zentrale Datenverarbeitungseinheit übermittelt werden kann. Hierdurch wird sichergestellt, dass eine hohe Flexibilität in der Konfiguration gegeben ist. Zudem kann das mobile Endgerät auch zur Fehleranalyse und Aktualisierung von Software- oder Firmware der Hauskommunikationsendgeräte der Hauskommunikationsanlage genutzt werden, um Wartungsprozesse effizienter zu gestalten.

Die Hauskommunikationsanlage umfasst eine Mehrzahl von physischen Hauskommunikationsendgeräten, die miteinander vernetzt sind und typischerweise zur Kommunikation zwischen einem Außenbereich und einem Innenbereich eines Gebäudes dienen. Hierbei kann es sich insbesondere um eine IP-basierte Netzwerk Infrastruktur handeln. Solche Hauskommunikationsendgeräte können insbesondere eine oder mehrere Türstationen zur Anbringung an einer Zugangsstelle, eine oder mehrere Innenstationen zur Kommunikation mit den Türstationen sowie ergänzende Hauskommunikationsendgeräte wie Türöffner oder Steuergeräte umfassen. Die physische Verbindung zwischen den Hauskommunikationsendgeräten kann kabelgebunden oder drahtlos erfolgen, beispielsweise über Ethernet, WLAN oder eine andere geeignete Netzwerkstruktur.

Die physischen Hauskommunikationsendgeräte der Hauskommunikationsanlage bezeichnen die einzelnen hardwarebasierten Bestandteile der Anlage. Neben Türstationen und Innenstationen können dies auch Zusatzmodule sein, die beispielsweise eine erweiterte Steuerung oder spezielle Funktionen bereitstellen. Diese Hauskommunikationsendgeräte können in ihrer Funktion und Konfigurierbarkeit variieren, sodass eine flexible Anpassung an die jeweiligen Anforderungen einer Installation ermöglicht wird.

Ein mobiles Endgerät dient zur lokalen Konfiguration der Hauskommunikationsanlage. Dabei handelt es sich insbesondere um ein tragbares, elektronisches Gerät wie ein Smartphone oder Tablet, das eine entsprechende Anwendung ausführt und eine Kommunikationsverbindung mit der Hauskommunikationsanlage herstellen kann. Das mobile Endgerät ermöglicht es, Konfigurationsdaten direkt vor Ort einzugeben, zu bearbeiten und auf die Hauskommunikationsanlage zu übertragen, ohne eine permanente Verbindung zu einer zentralen Datenverarbeitungseinheit zu benötigen.

Die mobile Anwendung stellt die Softwarelösung bereit, die auf dem mobilen Endgerät ausgeführt wird und dem Benutzer eine grafische Schnittstelle zur Verfügung stellt. Sie dient insbesondere dazu, physische Hauskommunikationsendgeräte der Hauskommunikationsanlage zu erfassen, Einstellungen vorzunehmen und die resultierenden Konfigurationsdaten in Form einer Konfiguration, zum Beispiel einer Konfigurationsdatei, zu speichern. Die mobile Anwendung kann darüber hinaus Zusatzfunktionen bereitstellen, wie beispielsweise die Möglichkeit, bestehende Konfigurationen auszulesen, anzupassen und wieder auf die Hauskommunikationsanlage zu übertragen. Ferner kann die mobile Anwendung kann auch dazu genutzt werden den aktuellen Betriebsstatus der Geräte anzuzeigen, beispielsweise um bei einer Fehlersuche zu unterstützen.

Um eine fehlerfreie Zuordnung der Konfigurationsdaten zu den physischen Hauskommunikationsendgeräte zu gewährleisten, erfolgt eine eindeutige Identifikation jeder Komponente. Diese Identifikation stellt sicher, dass jede Konfiguration exakt das richtigen Hauskommunikationsendgerät zugewiesen wird, was insbesondere bei größeren Installationen mit mehreren baugleichen Hauskommunikationsendgeräte von Vorteil ist. Die genauen Methoden zur Identifikation werden später in Verbindung mit Anspruch zwei näher erläutert.

Die Konfiguration dient als strukturierte Datenspeicherung für die erstellten Einstellungen der Hauskommunikationsanlage. Sie wird von der mobilen Anwendung generiert und kann anschließend auf die physischen Hauskommunikationsendgeräte der Hauskommunikationsanlage übertragen werden. Die Konfiguration kann sowohl einfache Parameter wie Klingeltöne oder Lautstärkeeinstellungen als auch komplexere Konfigurationen, beispielsweise die Zuordnung von Türstationen zu Innenstationen, enthalten. Die Konfiguration kann entweder direkt vom mobilen Endgerät an die Hauskommunikationsanlage übermittelt oder in einer zentralen Datenverarbeitungseinheit gespeichert und von dort abgerufen werden.

Gemäß einer Ausführungsform kann die eindeutige Identifikation eines physischen Hauskommunikationsendgeräts mittels einer der definierten Methoden erfasst werden. Eine Möglichkeit besteht in der optischen Erfassung, beispielsweise durch das Scannen eines QR-Codes oder Barcodes, was mit der Kamera des mobilen Endgeräts oder einer anderen optischen Erfassungseinheit erfolgen kann. Alternativ kann die Identifikation elektronisch durch das Auslesen einer RFID- oder NFC-Kennung erfolgen, sofern das physische Hauskommunikationsendgerät mit einem entsprechenden Speicherchip ausgestattet ist und das mobile Endgerät über eine kompatible Leseeinheit verfügt. Als weitere Option kann die Identifikation auch manuell durch die Eingabe eines Identifikationscodes, insbesondere einer Seriennummer, in die mobile Anwendung erfolgen.

Die Auswahl der Identifikationsmethode kann sich nach den verfügbaren Identifikationsmerkmalen des jeweiligen Hauskommunikationsendgeräts richten. Insbesondere bietet die optische oder elektronische Erfassung den Vorteil eines schnellen und fehlerfreien Identifikationsprozesses, während die manuelle Eingabe als alternative Methode genutzt werden kann, falls eine automatische Erfassung nicht möglich ist. Bei der optischen Identifikation, etwa über einen QR-Code oder Barcode, kann das Identifikationsmerkmal sowohl auf dem Hauskommunikationsendgerät selbst als auch auf dessen Verpackung oder zugehörigen Dokumenten aufgebracht sein. Dadurch ist es möglich, das Hauskommunikationsendgerät zu identifizieren, ohne es zuvor aus der Verpackung entnehmen zu müssen, was insbesondere während der Vorbereitungsphase der Installation von Vorteil sein kann.

Gemäß einer weiteren Ausführungsform kann die Übertragung der Konfigurationsdaten an das physische Hauskommunikationsendgerät der Hauskommunikationsanlage über verschiedene Kommunikationswege erfolgen. Eine Möglichkeit besteht in der direkten drahtlosen Übertragung zwischen dem mobilen Endgerät und mindestens eines physischen Hauskommunikationsendgeräts der Hauskommunikationsanlage. Hierfür kann insbesondere eine Verbindung über ein Funkprotokoll, wie WLAN- oder Bluetooth genutzt werden, über die das mobile Endgerät die Konfigurationsdaten an die entsprechenden physischen Hauskommunikationsendgeräte sendet. In einer bevorzugten Ausführungsform kann eines dieser physischen Hauskommunikationsendgeräte als zentrale Einheit oder Master-Komponente fungieren, die die empfangenen Konfigurationsdaten an weitere physische Hauskommunikationsendgeräte der Hauskommunikationsanlage innerhalb des Netzwerks weiterleitet.

Alternativ kann die Übertragung der Konfigurationsdaten über eine Netzwerkverbindung zu einer zentralen Datenverarbeitungseinheit erfolgen. In diesem Fall sendet das mobile Endgerät die in der mobilen Anwendung erstellte Konfiguration an die zentrale Datenverarbeitungseinheit, die wiederum die Daten an die Hauskommunikationsanlage weiterleitet. Dies bietet insbesondere dann Vorteile, wenn eine direkte Verbindung zwischen dem mobilen Endgerät und der Hauskommunikationsanlage nicht möglich oder nicht erwünscht ist. Zudem ermöglicht diese Variante eine zentrale Verwaltung der Konfigurationsdaten, wodurch eine spätere Nachverfolgung oder Modifikation erleichtert wird.

Beide Übertragungsmethoden können je nach Anforderungen und Gegebenheiten flexibel eingesetzt werden. Beispielsweise kann die direkte drahtlose Übertragung bevorzugt werden, wenn das mobile Endgerät sich in unmittelbarer Nähe zur Hauskommunikationsanlage befindet und eine schnelle Konfiguration erfolgen soll.

Gemäß einer weiteren Ausführungsform kann das Verfahren einen Schritt zum Hochladen gespeicherter Konfigurationsdaten an eine zentrale Datenverarbeitungseinheit umfassen, sobald eine Datenverbindung zwischen dem mobilen Endgerät und der zentralen Datenverarbeitungseinheit besteht. Dies ermöglicht es, lokal erstellte oder modifizierte Konfigurationsdaten nicht nur direkt an die Hauskommunikationsanlage zu übertragen, sondern sie auch zentral zu speichern.

Das Hochladen der Konfigurationsdaten kann automatisiert oder manuell erfolgen. Beispielsweise könnte die mobile Anwendung so konzipiert sein, dass sie bei bestehender Netzwerkverbindung automatisch eine Synchronisation mit der zentralen Datenverarbeitungseinheit durchführt. Alternativ kann der Benutzer explizit die Synchronisation anstoßen, um die Kontrolle über den Zeitpunkt des Hochladens zu behalten. In beiden Fällen sorgt diese Ausführungsform dafür, dass Änderungen, die lokal an einer Hauskommunikationsanlage vorgenommen wurden, auch in der zentralen Datenverarbeitungseinheit gespeichert und für zukünftige Konfigurationsvorgänge oder Wartungsarbeiten verfügbar sind.

Besonders vorteilhaft ist diese Funktion in Szenarien, in denen eine Hauskommunikationsanlage zunächst ohne direkte Verbindung zur zentralen Datenverarbeitungseinheit konfiguriert wird, beispielsweise während der Installation in einem Gebäude ohne aktive Internetverbindung. In einem solchen Fall kann die Konfiguration zunächst lokal auf dem mobilen Endgerät durchgeführt und später, wenn eine Verbindung zur zentralen Datenverarbeitungseinheit besteht, hochgeladen werden. Auf diese Weise wird sichergestellt, dass alle Änderungen und Einstellungen langfristig dokumentiert und bei Bedarf wiederverwendet oder angepasst werden können.

Gemäß einer weiteren Ausführungsform kann das Verfahren einen Schritt zum Abrufen von Konfigurationsdaten aus einer zentralen Datenverarbeitungseinheit umfassen, sofern eine Datenverbindung zwischen dem mobilen Endgerät und der zentralen Datenverarbeitungseinheit besteht. Dies ermöglicht es, bestehende Konfigurationsdaten von einer entfernten Datenquelle zu beziehen und lokal auf dem mobilen Endgerät zu speichern. Die abgerufenen Daten können anschließend in der mobilen Anwendung bearbeitet und nach Abschluss der Konfiguration entweder direkt an die Hauskommunikationsanlage übertragen oder erneut in die zentrale Datenverarbeitungseinheit hochgeladen werden.

Diese Funktion ist insbesondere dann von Vorteil, wenn eine Hauskommunikationsanlage bereits zuvor konfiguriert wurde und die bestehende Konfiguration als Ausgangspunkt für weitere Anpassungen oder Wartungsarbeiten genutzt werden soll. Beispielsweise kann ein Installateur oder Servicetechniker auf diesem Weg aktuelle oder frühere Konfigurationsdaten abrufen, modifizieren und anschließend erneut bereitstellen, ohne eine vollständige Neukonfiguration durchführen zu müssen.

Darüber hinaus kann diese Ausführungsform dazu genutzt werden, um eine Hauskommunikationsanlage zunächst über eine zentrale Datenverarbeitungseinheit zu planen und zu konfigurieren. Die erstellten Konfigurationsdaten können dann von einem Installateur oder Servicetechniker vor Ort auf das mobile Endgerät geladen und dort weiterbearbeitet werden. Falls während der Installation Anpassungen erforderlich sind, können diese direkt auf dem mobilen Endgerät vorgenommen und anschließend entweder sofort an die Hauskommunikationsanlage übertragen oder zur späteren Speicherung wieder in die zentrale Datenverarbeitungseinheit hochgeladen werden.

Somit stellt diese Ausführungsform sicher, dass die Konfiguration flexibel gehandhabt werden kann und sowohl zentrale als auch lokale Anpassungen ermöglicht werden, ohne dass eine permanente Verbindung zur zentralen Datenverarbeitungseinheit erforderlich ist.

Gemäß einer weiteren Ausführungsform ist die mobile Anwendung dazu ausgebildet, nach der Identifikation eines physischen Hauskommunikationsendgeräts den zugehörigen Hauskommunikationsendgerätetyp anhand einer in der Anwendung gespeicherten Datenbank zu ermitteln. Basierend auf dieser Ermittlung werden relevante Konfigurationsparameter, Standardwerte und/oder weitere für die Konfiguration relevante Informationen bestimmt.

Durch diese Funktionalität kann die mobile Anwendung automatisch vordefinierte Einstellungen für das identifizierte Hauskommunikationsendgerät bereitstellen, was den Konfigurationsprozess erheblich erleichtert und beschleunigt. So kann beispielsweise nach dem Scannen eines QR-Codes oder dem Auslesen einer RFID-Kennung festgestellt werden, um welche Art von physischem Hauskommunikationsendgerät es sich handelt - beispielsweise eine Türstation oder eine Innenstation mit bestimmten Leistungsmerkmalen. Daraufhin können automatisch entsprechende Konfigurationsoptionen angezeigt werden, wobei bereits empfohlene Standardwerte voreingestellt sein können. Dies reduziert mögliche Konfigurationsfehler und sorgt für eine konsistente und effiziente Einrichtung der Hauskommunikationsanlage.

Ein weiterer Vorteil dieser Ausführungsform besteht darin, dass die in der Anwendung gespeicherte Datenbank auch Informationen zu älteren oder abgekündigten Hauskommunikationsendgeräte enthalten kann. Auf diese Weise kann sichergestellt werden, dass auch bei Wartungs- oder Austauschmaßnahmen die relevanten Konfigurationsparameter für bereits installierte Hauskommunikationsendgeräte schnell abgerufen werden können.

Die lokale Speicherung der Datenbank hat zudem den Vorteil, dass die mobile Anwendung unabhängig von einer bestehenden Internetverbindung genutzt werden kann. Dadurch ist es möglich, die Hauskommunikationsanlage auch in Umgebungen zu konfigurieren, in denen keine direkte Verbindung zur zentralen Datenverarbeitungseinheit oder zum Internet besteht.

Gemäß einer weiteren Ausführungsform kann die mobile Anwendung nach der Identifikation eines physischen Hauskommunikationsendgeräts den zugehörigen Hauskommunikationsendgerätetyp nicht nur aus einer lokal gespeicherten Datenbank bestimmen, sondern alternativ oder zusätzlich aus einer externen Datenquelle abrufen. Insbesondere kann diese externe Datenquelle die zentrale Datenverarbeitungseinheit sein, in der umfassende Informationen über alle unterstützten physischen Hauskommunikationsendgeräte der Hauskommunikationsanlage gespeichert sind. Basierend auf dem abgerufenen Hauskommunikationsendgerätetyp können relevante Konfigurationsparameter, Standardwerte und weitere für die Konfiguration notwendige Informationen ermittelt werden.

Diese Variante ermöglicht eine dynamische und stets aktuelle Bereitstellung von Konfigurationsinformationen. Während eine lokal gespeicherte Datenbank in der mobilen Anwendung möglicherweise nicht regelmäßig aktualisiert wird, kann durch den Abruf der Hauskommunikationsendgerätedaten aus einer externen Quelle sichergestellt werden, dass auch neuere oder überarbeitete Hauskommunikationsendgeräte erkannt und mit den aktuellsten Konfigurationsoptionen versehen werden.

Ein weiterer Vorteil dieser Methode besteht darin, dass Hersteller oder Betreiber der Hauskommunikationsanlage zentral Änderungen an Standardkonfigurationen oder empfohlene Parameterupdates vornehmen können. Dadurch kann die mobile Anwendung stets mit den neuesten Einstellungen arbeiten, ohne dass eine manuelle Aktualisierung der lokalen Datenbank erforderlich ist.

Die Möglichkeit, zwischen lokaler und externer Ermittlung des Hauskommunikationsendgerätetyps zu wählen, bietet zudem eine hohe Flexibilität. Falls eine Internetverbindung verfügbar ist, kann die Anwendung stets auf die aktuellen Informationen der zentralen Datenverarbeitungseinheit zugreifen. Falls keine Verbindung besteht, kann stattdessen auf die lokal gespeicherten Daten zurückgegriffen werden, um eine reibungslose Konfiguration sicherzustellen.

Gemäß einer weiteren Ausführungsform kann die Übertragung der Konfigurationsdaten an ein Hauskommunikationsendgerät der Hauskommunikationsanlage erst nach einer erfolgreichen Autorisierung erfolgen. Diese Autorisierung dient der Sicherheit, um unbefugte oder unbeabsichtigte Änderungen an der Hauskommunikationsanlage zu verhindern und sicherzustellen, dass nur autorisierte Personen Konfigurationsänderungen vornehmen können.

Die Autorisierung kann auf unterschiedliche Weise erfolgen. Eine Möglichkeit besteht darin, dass der Benutzer einen Sicherheitscode eingibt, der in dem physischen Hauskommunikationsendgerät hinterlegt ist. Diese Methode erlaubt eine einfache aber effektive Kontrolle, da der Code nur Personen bekannt sein dürfte, die berechtigt sind, Konfigurationsänderungen durchzuführen. Alternativ kann die Autorisierung durch eine mechanische Bestätigung erfolgen, beispielsweise durch Betätigung eines speziell vorgesehenen Freigabeelements an einer physischen Komponente. Dies stellt sicher, dass sich die autorisierte Person tatsächlich vor Ort befindet und absichtlich eine Konfigurationsänderung vornehmen möchte.

Zusätzlich oder alternativ kann eine netzwerkbasierte Authentifizierung genutzt werden. Dabei kann die Hauskommunikationsanlage eine Verbindung zu einer lokalen oder externen Datenverbindung herstellen, um die Berechtigung des Benutzers zu überprüfen. Hierbei könnte beispielsweise ein zentrales Benutzerverwaltungssystem eingesetzt werden, das Zugriffsrechte für bestimmte Personen oder Geräte verwaltet. Dies ermöglicht eine flexible und skalierbare Verwaltung von Berechtigungen, insbesondere in größeren Installationen mit mehreren Benutzern oder Administratoren.

Durch diese verschiedenen Autorisierungsmöglichkeiten wird sichergestellt, dass die Hauskommunikationsanlage vor unbefugten Änderungen geschützt ist, während gleichzeitig eine einfache und praktikable Handhabung für autorisierte Benutzer gewährleistet wird.

Gemäß einer weiteren Ausführungsform kann das mobile Endgerät nach der Verbindung mit der Hauskommunikationsanlage aktuelle Konfigurationsdaten aus einer Mehrzahl physischer Hauskommunikationsendgeräte der Hauskommunikationsanlage auslesen. Dies ermöglicht es dem Benutzer, eine bestehende Konfiguration einzusehen, zu analysieren und gegebenenfalls zu modifizieren, ohne dass eine vollständige Neukonfiguration erforderlich ist.

Durch das Auslesen der Konfigurationsdaten erhält der Benutzer einen detaillierten Überblick über die aktuelle Systemkonfiguration. Dies kann beispielsweise erforderlich sein, wenn ein Hauskommunikationsendgerät ausgetauscht oder eine bestehende Installation überprüft werden soll. Die ausgelesenen Konfigurationsdaten können verschiedene Parameter umfassen, darunter beispielsweise die Zuordnung von Innen- und Türstationen, Klingeltöne, Lautstärkeeinstellungen oder Autorisierungsrechte für Türöffnungen.

Das Auslesen kann über eine direkte drahtlose Verbindung zwischen dem mobilen Endgerät und der Hauskommunikationsanlage erfolgen, beispielsweise über WLAN oder Bluetooth, sofern eine solche Verbindung verfügbar ist. Alternativ kann das mobile Endgerät eine bestehende Netzwerkverbindung nutzen, um die Daten von einer zentralen Datenverarbeitungseinheit abzurufen, sofern diese die Konfigurationsdaten der Hauskommunikationsanlage verwaltet.

Diese Funktionalität ermöglicht eine effiziente Wartung und Überprüfung der Hauskommunikationsanlage, da der Benutzer die bestehenden Einstellungen jederzeit einsehen kann, ohne dass eine physische Interaktion mit den einzelnen Hauskommunikationsendgeräten erforderlich ist.

Gemäß einer weiteren Ausführungsform kann das mobile Endgerät die ausgelesenen Konfigurationsdaten analysieren und auf Grundlage der Analyse mögliche Fehler im Betrieb der Hauskommunikationsanlage identifizieren. Durch diese Funktion wird es möglich, potenzielle Probleme in der Installation oder Konfiguration der Hauskommunikationsanlage frühzeitig zu erkennen und gegebenenfalls zu korrigieren.

Die Fehleranalyse kann verschiedene Aspekte umfassen. Beispielsweise kann überprüft werden, ob alle Hauskommunikationsendgeräte ordnungsgemäß vernetzt sind und die Konfiguration der Hauskommunikationsanlage widerspruchsfrei ist. Typische Fehler könnten unvollständige Zuordnungen zwischen Klingeltasten und Innenstationen, fehlende Berechtigungen für Türöffnungsfunktionen oder fehlerhafte Netzwerkkonfigurationen sein.

Zudem könnte eine Analyse durchgeführt werden, um Kommunikationsprobleme zwischen den einzelnen Hauskommunikationsendgeräten zu erkennen, etwa eine schwache oder instabile drahtlose Verbindung.

Die identifizierten Fehler oder Unstimmigkeiten können dem Benutzer über die mobile Anwendung angezeigt werden. Dabei kann das System entweder lediglich eine Warnung ausgeben oder direkt Vorschläge zur Behebung der erkannten Probleme unterbreiten. Die Fehleranalyse trägt somit zur Zuverlässigkeit der Hauskommunikationsanlage bei und erleichtert dem Benutzer die Wartung und Optimierung des Systems.

Gemäß einer weiteren Ausführungsform kann das mobile Endgerät zusätzlich Software- oder Firmware-Versionen aus mindestens einem physischen Hauskommunikationsendgerät der Hauskommunikationsanlage auslesen, diese mit einer Referenz vergleichen und basierend darauf ein Update vorschlagen oder ausführen.

Das regelmäßige Überprüfen und Aktualisieren der Softwareoder Firmware-Versionen stellt sicher, dass die Hauskommunikationsanlage stets mit den neuesten Funktionen und Sicherheitsupdates ausgestattet ist. Das mobile Endgerät kann hierzu nach der Verbindung mit der Hauskommunikationsanlage die aktuell installierten Versionen der Software oder Firmware aus den physischen Hauskommunikationsendgeräten auslesen und mit einer zentralen Referenz abgleichen. Diese Referenz kann entweder in der mobilen Anwendung selbst hinterlegt oder von einer externen Datenquelle, insbesondere der zentralen Datenverarbeitungseinheit, abgerufen werden.

Falls festgestellt wird, dass eine neuere Version verfügbar ist, kann dem Benutzer in der mobilen Anwendung ein entsprechender Hinweis angezeigt werden. In Abhängigkeit von den Einstellungen oder Benutzerpräferenzen kann das Update entweder automatisch durchgeführt oder erst nach einer Bestätigung durch den Benutzer eingespielt werden. In manchen Fällen kann es auch notwendig sein, dass eine Autorisierung für das Update erforderlich ist, insbesondere wenn sicherheitsrelevante Änderungen vorgenommen werden.

Durch diese Funktion kann die Hauskommunikationsanlage auf dem neuesten Stand gehalten werden, was sowohl die Sicherheit als auch die langfristige Funktionsfähigkeit der Anlage verbessert.

Gemäß einer weiteren Ausführungsform kann die mobile Anwendung nach der Identifikation eines physischen Hauskommunikationsendgeräts die erfasste Identifikation an eine zentrale Datenverarbeitungseinheit übermitteln, um dort ein entsprechendes digitales Abbild des Hauskommunikationsendgeräts zu erstellen und zu konfigurieren.

Durch diese Funktion wird sichergestellt, dass alle in der Hauskommunikationsanlage verwendeten Hauskommunikationsendgeräte nicht nur lokal im mobilen Endgerät erfasst werden, sondern auch zentral in einer übergeordneten Datenbank gespeichert und verwaltet werden können. Dies ermöglicht eine konsistente und vollständige Dokumentation der gesamten Anlage, auch über längere Zeiträume hinweg.

Nachdem die Identifikationsdaten an die zentrale Datenverarbeitungseinheit übermittelt wurden, kann dort automatisch geprüft werden, ob das betreffende physische Hauskommunikationsendgerät bereits im digitalen Abbild vorhanden ist oder ob sie als neue Hauskommunikationsendgerät hinzugefügt werden muss. Falls das Hauskommunikationsendgerät bereits registriert ist, können bestehende Konfigurationsdaten abgerufen und gegebenenfalls aktualisiert werden. Falls es sich um ein neues Hauskommunikationsendgerät handelt, können entsprechende Standardwerte oder vordefinierte Konfigurationsoptionen vorgeschlagen werden.

Durch diese zentrale Erfassung und Synchronisation wird sichergestellt, dass die erfassten Hauskommunikationsendgeräte jederzeit in der zentralen Datenverarbeitungseinheit gespeichert sind und später für Wartung, Erweiterung oder Austausch der Hauskommunikationsanlage genutzt werden können. Gleichzeitig ermöglicht dies eine verbesserte Nachvollziehbarkeit, da Änderungen und Anpassungen nicht nur lokal, sondern auch in der zentralen Datenbank dokumentiert werden.

Gemäß einer weiteren Ausführungsform ist das mobile Endgerät dazu ausgebildet, vor der Übertragung der Konfigurationsdaten eine Sicherheitsautorisierung durchzuführen. Hierbei werden Sicherheitsinformationen von einem physischen Hauskommunikationsendgerät der Hauskommunikationsanlage abgefragt und verifiziert.

Durch diese Maßnahme wird sichergestellt, dass nur berechtigte Nutzer Änderungen an der Konfiguration der Hauskommunikationsanlage vornehmen können. Die Sicherheitsautorisierung kann in unterschiedlicher Weise erfolgen. Beispielsweise könnte das physische Hauskommunikationsendgerät einen Sicherheitscode enthalten, der durch das mobile Endgerät ausgelesen und mit einer hinterlegten Datenbank abgeglichen wird. Alternativ kann die Autorisierung über eine mechanische Bestätigung an das Hauskommunikationsendgerät erfolgen, beispielsweise durch Drücken eines speziellen Freigabeknopfes. Eine weitere Möglichkeit besteht in einer netzwerkbasierten Authentifizierung, etwa über eine verschlüsselte Kommunikationsverbindung oder die Eingabe von Benutzeranmeldedaten.

Diese Sicherheitsmaßnahme schützt die Hauskommunikationsanlage vor unbefugten Änderungen und stellt sicher, dass nur berechtigte Personen die Konfiguration ändern oder neue Hauskommunikationsendgeräte hinzufügen können. Insbesondere in sicherheitskritischen Anwendungen, beispielsweise in Mehrfamilienhäusern oder Unternehmensgebäuden, kann eine solche Sicherheitsüberprüfung dazu beitragen, unbefugte Manipulationen zu verhindern.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Figur 1: eine schematische Darstellung einer Hauskommunikationsanlage mit einem mobilen Endgerät zur lokalen Konfiguration,
- Figur 2: eine schematische Darstellung des mobilen Endgeräts mit seinen funktionalen Komponenten,
- Figur 3: eine Übersicht über die Konfiguration der Hauskommunikationsanlage und deren mögliche Synchronisation mit einer zentralen Datenverarbeitungseinheit,
- Figur 4: ein Ablaufdiagramm zur Veranschaulichung eines Verfahrens zur lokalen Konfiguration einer Hauskommunikationsanlage.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

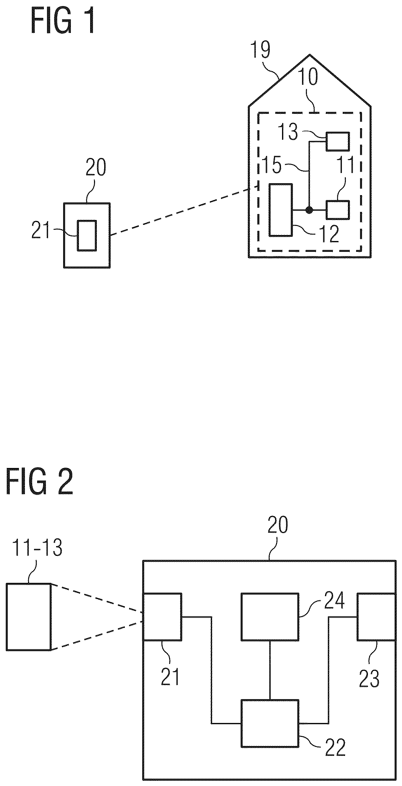

Figur 1 zeigt eine schematische Darstellung eines Gebäudes 19, in dem eine Hauskommunikationsanlage 10 installiert ist. Die Hauskommunikationsanlage umfasst mehrere physische Hauskommunikationsendgeräte 11-13, die über eine Netzwerkverbindung 15 miteinander gekoppelt sind. Exemplarisch sind in der Darstellung eine Türstation 11, eine Tür mit einem Türöffner 12 sowie mehrere Innenstationen 13 dargestellt. Die Anzahl und Art der Hauskommunikationsendgeräte 11-13 können je nach Installationsumgebung variieren, sodass auch weitere oder abweichende physische Hauskommunikationsendgeräte Teil der Hauskommunikationsanlage sein können.

Die Netzwerkverbindung 15 zwischen den physischen Hauskommunikationsendgeräte 11-13 kann kabelgebunden, drahtlos oder in einer Kombination aus beiden Technologien ausgeführt sein. Eine kabelgebundene Netzwerkverbindung kann beispielsweise über Ethernet realisiert werden und ermöglicht neben der Datenübertragung auch die Energieversorgung der Hauskommunikationsendgeräte über Power over Ethernet (PoE). Alternativ oder ergänzend kann eine drahtlose Verbindung, insbesondere über WLAN, genutzt werden, was insbesondere in Bestandsgebäuden vorteilhaft ist, in denen keine strukturierte Netzwerkverkabelung vorhanden ist. Mischformen sind ebenfalls möglich, sodass einige Hauskommunikationsendgeräte kabelgebunden angebunden sind, während andere über eine drahtlose Verbindung in das Netzwerk integriert werden.

Die Hauskommunikationsanlage 10 kann eigenständig betrieben werden, wobei die physischen Hauskommunikationsendgeräte direkt miteinander kommunizieren, oder sie kann mit einer entfernten zentralen Datenverarbeitungseinheit gekoppelt sein, die zusätzliche Konfigurations- und Verwaltungsfunktionen bereitstellt. Diese entfernte zentrale Datenverarbeitungseinheit ist in Figur 1 nicht dargestellt. In dem nachfolgend beschriebenen Konzept wird die Hauskommunikationsanlage jedoch lokal konfiguriert, insbesondere wenn sie nicht oder zumindest noch nicht über eine Datenverbindung zu einer entfernten Datenverarbeitungseinheit verfügt. Hierbei erfolgt die Einrichtung und Anpassung der Konfiguration unter Verwendung des mobilen Endgeräts 20, das über eine geeignete Kommunikationsverbindung mit einem Hauskommunikationsendgerät 11-13 der Hauskommunikationsanlage 10 gekoppelt ist. Dabei können die Konfigurationsdaten über eine drahtlose Verbindung zwischen dem mobilen Endgerät 20 der Hauskommunikationsanlage 10 übertragen werden.

Figur 2 zeigt das mobile Endgerät 20, das zur lokalen Konfiguration der Hauskommunikationsanlage 10 verwendet wird. Das mobile Endgerät 20 umfasst eine Eingabeeinrichtung 21, die dazu ausgelegt ist, eine eindeutige Identifikation eines physischen Hauskommunikationsendgeräts 11-13 der Hauskommunikationsanlage zu erfassen.

Die Identifikation kann auf verschiedene Weise erfolgen. Die Eingabeeinrichtung 21 kann eine optische Erfassung umfassen, beispielsweise einen QR-Code- oder Barcodescanner, um eine auf das physische Hauskommunikationsendgerät oder ihrer Verpackung aufgebrachte Kennung zu lesen. Alternativ kann sie ein elektronisches Lesegerät für RFID-Tags oder NFC-Kennungen beinhalten, sodass die Identifikation kontaktlos ausgelesen werden kann. Schließlich besteht die Möglichkeit einer manuellen Eingabe, indem der Benutzer eine Seriennummer oder einen anderen Identifikationscode über eine Benutzerschnittstelle des mobilen Endgeräts 20 eingibt.

Parallel zur Erfassung der Identifikation können optional zusätzliche Informationen zu dem jeweiligen Hauskommunikationsendgerät 11-13 spezifiziert werden. Beispielsweise kann der geplante Einbauort festgelegt und in der Anwendung des mobilen Endgeräts 20 hinterlegt werden. Dies ermöglicht eine geordnete Installation der Hauskommunikationsanlage 10, wobei der Einbauort der Hauskommunikationsendgeräte bereits dokumentiert ist, bevor die physische Installation erfolgt.

Das mobile Endgerät 20 umfasst zusätzlich eine Benutzerschnittstelle 24, die insbesondere als Touchscreen oder eine andere interaktive Anzeigevorrichtung ausgeführt sein kann. Die Benutzerschnittstelle 24 ermöglicht die Anzeige relevanter Informationen, beispielsweise zum erkannten physischen Hauskommunikationsendgerät 11-13, zur aktuellen Konfiguration oder zu möglichen Optionen für die Einrichtung. Gleichzeitig erlaubt sie dem Benutzer, Eingaben vorzunehmen, etwa zur Spezifikation von Konfigurationsparametern, zur Auswahl eines Einbauorts oder zur Bestätigung einer vorgenommenen Einstellung. Alternativ oder ergänzend kann das mobile Endgerät 20 über weitere Bedienelemente verfügen, beispielsweise Tasten oder einen Drehregler, um eine interaktive Bedienung zu ermöglichen.

Eine Verarbeitungseinheit 22 verarbeitet die durch die Eingabeeinrichtung 21 erfassten Daten und wertet die Benutzerinteraktionen über die Benutzerschnittstelle 24 aus. Basierend darauf erstellt die Verarbeitungseinheit 22 Konfigurationsdaten für das jeweilige physische Hauskommunikationsendgerät 11-13 der Hauskommunikationsanlage 10. Darüber hinaus kann die Verarbeitungseinheit 22 weitere Funktionen übernehmen, wie etwa die Validierung der eingegebenen Parameter, die Speicherung und Verwaltung bereits erfasster Daten, die Synchronisation mit anderen Geräten oder Systemen oder das Bereitstellen von Konfigurationsvorschlägen basierend auf vordefinierten Standards oder gespeicherten Vorlagen.

Die Datenübertragungseinheit 23 ermöglicht die Kommunikation des mobilen Endgeräts 20 mit der Hauskommunikationsanlage 10 sowie mit externen Systemen. Sie umfasst eine drahtlose Kommunikationsschnittstelle, die insbesondere WLAN und/oder Bluetooth unterstützt. Darüber kann das mobile Endgerät 20 eine Verbindung zu einem physischen Hauskommunikationsendgerät 11-13 der Hauskommunikationsanlage 10 aufbauen, beispielsweise zu einer Türstation 11, um die erstellten Konfigurationsdaten zu übertragen. Alternativ oder ergänzend kann die Datenübertragungseinheit 23 eine Verbindung zu einer entfernten zentralen Datenverarbeitungseinheit aufbauen, beispielsweise über eine WLAN- oder Mobilfunkverbindung. Dadurch können Konfigurationsdaten auch mit einer zentralen Infrastruktur synchronisiert, aktualisiert oder aus einem dort gespeicherten digitalen Abbild abgerufen werden.

Mithilfe der zuvor beschriebenen Konstellation ist eine Installation und Konfiguration der Hauskommunikationsanlage 10 direkt vor Ort möglich. Ein Elektroinstallateur oder eine andere befugte Person kann das mobile Endgerät 20 nutzen, um die zur Hauskommunikationsanlage gehörenden physischen Hauskommunikationsendgeräte 11-13 schrittweise zu erfassen und in die Konfigurationsanwendung einzubinden.

Zunächst wird jedem physischen Hauskommunikationsendgerät vor oder während des Einbaus über die Eingabeeinrichtung 21 des mobilen Endgeräts 20 erfasst. Die eindeutige Identifikation kann über eine der zuvor beschriebenen Methoden erfolgen, beispielsweise durch Scannen eines QR-Codes oder Barcodes, elektronisches Auslesen eines RFID-Tags oder manuelle Eingabe einer Seriennummer. Parallel zur Identifikation kann direkt in der mobilen Anwendung der jeweilige Einbauort des erfassten Hauskommunikationsendgeräts festgelegt und gespeichert werden. Alternativ kann der Einbauort zu einem späteren Zeitpunkt ergänzt oder angepasst werden.

Sobald die physische Installation der erfassten Hauskommunikationsendgeräte abgeschlossen ist und diese elektrisch angeschlossen sowie mit dem Netzwerk der Hauskommunikationsanlage 10 verbunden wurden, kann die Konfiguration über die Anwendung auf dem mobilen Endgerät 20 erfolgen. Die zuvor erfassten Hauskommunikationsendgeräte sind nun in der Anwendung verfügbar und können durch den Benutzer weiter konfiguriert werden.

Nachdem die physischen Hauskommunikationsendgeräte 11-13 der Hauskommunikationsanlage 10 erfasst und installiert wurden, können sie in der Anwendung auf dem mobilen Endgerät 20 zur Konfiguration angezeigt werden. Der Benutzer hat die Möglichkeit, verschiedene Einstellungen für die erfassten Hauskommunikationsendgeräte vorzunehmen, um die Funktionalität der Hauskommunikationsanlage entsprechend den Anforderungen anzupassen.

Ein wesentlicher Konfigurationsaspekt ist die Zuordnung von mechanischen oder virtuellen Klingeltasten zu Innenstationen. Der Benutzer kann für jede einzelne Tastenfunktion, beispielsweise Klingelknöpfe einer Türstation 11, eine oder mehrere Innenstationen 13 festlegen, an die der Klingelruf weitergeleitet wird. Dadurch kann beispielsweise bestimmt werden, dass ein bestimmter Klingelknopf nur eine einzelne Innenstation ansteuert oder dass mehrere Innenstationen gleichzeitig benachrichtigt werden.

Neben der Grundzuordnung können auch weitere Einstellungen für die einzelnen Hauskommunikationsendgeräte vorgenommen werden. So kann der Benutzer unter anderem einen Rufton auswählen, wobei verschiedene akustische Signale oder Melodien zur Verfügung stehen können. Ebenso kann die Lautstärke angepasst werden, die je nach Tageszeit oder Nutzervorgabe unterschiedlich eingestellt sein kann. Weiterhin besteht die Möglichkeit, ein Zeitschema festzulegen, um bestimmte Klingeltasten oder Lautstärkeregelungen zu bestimmten Uhrzeiten zu aktivieren oder zu deaktivieren. Darüber hinaus können Zugriffsrechte für Nutzer definiert werden, etwa um festzulegen, wer auf eine Türöffnerfunktion zugreifen oder wer Änderungen an der Konfiguration vornehmen darf.

Um die Konfiguration zu erleichtern, kann die mobile Anwendung für jedes erkannte Hauskommunikationsendgerät Standardwerte vorschlagen, die auf den üblichen Einstellungen für diesen Typ von Hauskommunikationsendgerät basieren. Diese Standardwerte können entweder direkt übernommen oder individuell angepasst werden.

Zusätzlich kann die Anwendung eine Plausibilitätsprüfung durchführen, um mögliche Fehlkonfigurationen zu erkennen. Dabei wird beispielsweise überprüft, ob jeder Klingelknopf mindestens einer Innenstation zugewiesen wurde oder ob widersprüchliche Einstellungen vorgenommen wurden. Falls Unstimmigkeiten oder fehlende Einstellungen erkannt werden, kann die Anwendung den Benutzer darauf hinweisen und gegebenenfalls automatisch Korrekturoptionen vorschlagen.

Nachdem die Konfiguration der Hauskommunikationsanlage 10 in der mobilen Anwendung abgeschlossen wurde, kann diese auf die physischen Hauskommunikationsendgeräte 11-13 übertragen werden. Dies erfolgt vorzugsweise drahtlos über die Datenübertragungseinheit 23 des mobilen Endgeräts 20. Die Übertragung der Konfigurationsdaten kann auf verschiedene Weise erfolgen, je nachdem, welche Kommunikationsmöglichkeiten in der Hauskommunikationsanlage zur Verfügung stehen.

In einer ersten Variante stellt eine der Hauskommunikationsendgeräte der Hauskommunikationsanlage, beispielsweise eine Türstation 11, eine eigene drahtlose Kommunikationsschnittstelle bereit, die es dem mobilen Endgerät ermöglicht, sich direkt mit ihr zu verbinden. Über diese Verbindung können die Konfigurationsdaten von der mobilen Anwendung an die Türstation 11 übertragen werden, die diese anschließend an die weiteren Hauskommunikationsendgeräte 12, 13 im Netzwerk 15 der Hauskommunikationsanlage verteilt.

Alternativ kann sich das mobile Endgerät mit einem bestehenden WLAN-Netzwerk des Gebäudes verbinden, in das auch die Hauskommunikationsanlage eingebunden ist. In diesem Fall kann die Übertragung der Konfigurationsdaten direkt über das lokale Netzwerk 15 erfolgen, wobei die Daten von der mobilen Anwendung über das WLAN an die Hauskommunikationsanlage gesendet und an die einzelnen Hauskommunikationsendgeräte weitergeleitet werden.

In beiden Varianten kann die Übertragung der Konfigurationsdaten so ausgelegt sein, dass sie entweder an alle Hauskommunikationsendgeräte 11-13 der Hauskommunikationsanlage 10 gesendet wird oder gezielt nur an einzelne, zuvor ausgewählte Hauskommunikationsendgeräte. Nach erfolgreicher Übertragung und Speicherung der Konfigurationsdaten in den einzelnen Hauskommunikationsendgeräten 11-13 ist die Hauskommunikationsanlage 10 entsprechend den vorgenommenen Einstellungen betriebsbereit.

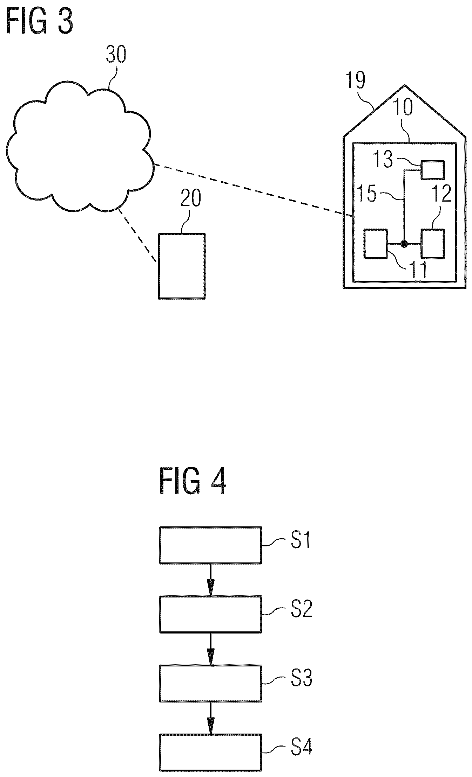

Figur 3 zeigt eine erweiterte Systemarchitektur zur Verwaltung der Hauskommunikationsanlage 10, die sich in einem Gebäude 19 befindet. Zusätzlich zum mobilen Endgerät 20, das zur lokalen Installation und Konfiguration verwendet wird, umfasst das System eine zentrale Datenverarbeitungseinheit 30. Diese Datenverarbeitungseinheit kann sich beispielsweise in einer Cloud oder auf einem entfernten Server befinden und ermöglicht eine zentrale Verwaltung der Hauskommunikationsanlage.

Das mobile Endgerät 20 kann die über die Anwendung erstellte Konfiguration der Hauskommunikationsanlage 10 an die zentrale Datenverarbeitungseinheit 30 übermitteln. Dies kann insbesondere über eine Internetverbindung erfolgen, sobald eine entsprechende Netzwerkanbindung verfügbar ist. Sofern die Konfigurationsdaten zuvor bereits auf die Hauskommunikationsanlage 10 übertragen wurden, kann die zentrale Datenverarbeitungseinheit 30 eine Kopie dieser Daten speichern und verwalten.

Darüber hinaus kann eine Datenverbindung zwischen der Hauskommunikationsanlage 10 und der zentralen Datenverarbeitungseinheit 30 aufgebaut werden. Dies ist insbesondere dann möglich, wenn das Gebäude 19 über einen Internetzugang oder eine vergleichbare Netzwerkverbindung verfügt. Dadurch können Konfigurationsdaten zwischen der Hauskommunikationsanlage 10 und der zentralen Datenverarbeitungseinheit 30 ausgetauscht werden.

Diese erweiterte Systemarchitektur ermöglicht mehrere Funktionen:
Einerseits kann die Konfiguration der Hauskommunikationsanlage 10 in der zentralen Datenverarbeitungseinheit 30 gespeichert und bei Bedarf angepasst werden. Änderungen an der Konfiguration können dann über die bestehende Datenverbindung an die Hauskommunikationsanlage 10 übermittelt werden.

Ferner ermöglicht die zentrale Datenverarbeitungseinheit 30 eine Synchronisation mit dem mobilen Endgerät 20. Dadurch kann der Benutzer die Konfiguration der Hauskommunikationsanlage auch über die mobile Anwendung abrufen, modifizieren und zurück an die zentrale Datenverarbeitungseinheit 30 übertragen. Falls eine Verbindung zur Hauskommunikationsanlage 10 besteht, können die aktualisierten Konfigurationsdaten anschließend automatisch an die physischen Hauskommunikationsendgeräte übertragen werden.

Dadurch ist es möglich, die Konfiguration der Hauskommunikationsanlage 10 aus der Ferne anzupassen. Der Benutzer kann beispielsweise unabhängig von seinem aktuellen Standort über das mobile Endgerät 20 Änderungen an der Konfiguration vornehmen und diese über die zentrale Datenverarbeitungseinheit 30 mit der Hauskommunikationsanlage 10 synchronisieren. Dies bietet insbesondere Vorteile für Wartungsarbeiten oder nachträgliche Anpassungen, ohne dass eine direkte Verbindung zwischen dem mobilen Endgerät 20 und der Hauskommunikationsanlage 10 erforderlich ist.

Neben der Möglichkeit, die Konfiguration über eine bestehende Datenverbindung zwischen der zentralen Datenverarbeitungseinheit 30 und der Hauskommunikationsanlage 10 zu aktualisieren, kann ein Benutzer mit dem mobilen Endgerät 20 auch direkt vor Ort eine Datenverbindung zur Hauskommunikationsanlage 10 aufbauen. Hierzu kann das mobile Endgerät 20 über eine drahtlose Verbindung, beispielsweise über WLAN oder Bluetooth, mit einem der physischen Hauskommunikationsendgeräte 11-13 der Hauskommunikationsanlage 10 gekoppelt werden. Insbesondere kann eine Türstation 11 oder ein anderes zentrales Hauskommunikationsendgerät als Kommunikationsschnittstelle dienen, um den Datenaustausch zwischen dem mobilen Endgerät 20 und den weiteren Hauskommunikationsendgeräten der Hauskommunikationsanlage 10 zu ermöglichen.

Sobald eine Verbindung zwischen dem mobilen Endgerät 20 und der Hauskommunikationsanlage 10 besteht, können nicht nur Konfigurationsdaten auf die Hauskommunikationsanlage 10 übertragen werden, sondern auch Statusinformationen ausgelesen werden. Dies ermöglicht dem Benutzer, den aktuellen Betriebszustand der Anlage zu überprüfen. Die ausgelesenen Informationen können unter anderem den Verbindungsstatus der einzelnen Hauskommunikationsendgeräte, die zuletzt empfangenen Signale von Klingelknöpfen oder Türöffnern sowie etwaige Fehlermeldungen umfassen.

Falls das System eine Abweichung von den erwarteten Betriebsparametern erkennt, kann die mobile Anwendung eine Diagnose durchführen und dem Benutzer mögliche Ursachen für das Problem anzeigen. Beispielsweise kann die Anwendung darauf hinweisen, dass eine Innenstation 13 nicht ordnungsgemäß mit dem Netzwerk 15 verbunden ist oder dass ein bestimmtes Hauskommunikationsendgerät nicht reagiert. Zusätzlich kann die mobile Anwendung Maßnahmen zur Fehlerbehebung vorschlagen, etwa eine Überprüfung der Verkabelung oder das erneute Laden der Konfigurationsdaten.

Ein weiterer Aspekt, der in diesem Zusammenhang von Bedeutung ist, betrifft die Aktualisierung von Software- und Firmware-Versionen der physischen Hauskommunikationsendgeräte. Das mobile Endgerät 20 kann während der Verbindung mit der Hauskommunikationsanlage 10 die auf den einzelnen Hauskommunikationsendgeräte 11-13 installierte Software auslesen und mit einer Referenzversion vergleichen. Falls veraltete Software erkannt wird, kann die mobile Anwendung dem Benutzer ein entsprechendes Update vorschlagen oder dieses, falls freigegeben, automatisch durchführen.

Die Aktualisierung der Firmware kann entweder direkt über das mobile Endgerät 20 erfolgen oder über eine bestehende Internetverbindung mit der zentralen Datenverarbeitungseinheit 30 synchronisiert werden. Falls vor Ort keine Internetverbindung verfügbar ist, kann das mobile Endgerät 20 die relevanten Softwarepakete zunächst lokal speichern und zu einem späteren Zeitpunkt, sobald eine Internetverbindung besteht, die aktualisierte Software auf die Hauskommunikationsanlage 10 übertragen.

Das beschriebene Verfahren zur lokalen Konfiguration einer Hauskommunikationsanlage 10 bietet eine besonders flexible und effiziente Möglichkeit zur Einrichtung, Wartung und Fehlerdiagnose, ohne dass eine permanente Verbindung zu einer entfernten Datenverarbeitungseinheit erforderlich ist. Insbesondere ermöglicht es die direkte Interaktion mit den physischen Hauskommunikationsendgeräten 11-13 der Hauskommunikationsanlage 10, sodass Installations- und Wartungsarbeiten unmittelbar vor Ort durchgeführt werden können. Die mobile Anwendung auf dem mobilen Endgerät 20 unterstützt den Installateur oder Techniker dabei, die einzelnen Hauskommunikationsendgeräte zu erfassen, zu konfigurieren und zu testen, bevor die Konfigurationsdaten in die Hauskommunikationsanlage 10 übertragen werden.

Ein entscheidender Vorteil besteht darin, dass die vollständige Einrichtung der Hauskommunikationsanlage 10 auch ohne eine aktive Internetverbindung erfolgen kann. Dies ist besonders vorteilhaft in Gebäuden, in denen während der Installationsphase noch kein Internetzugang vorhanden ist oder in Szenarien, in denen eine lokale, unabhängige Konfigurationsmöglichkeit gewünscht wird. Zudem können Benutzer oder Techniker später auf das mobile Endgerät zugreifen, um die aktuelle Konfiguration auszulesen, Änderungen vorzunehmen und diese erneut auf die Hauskommunikationsanlage zu übertragen.

Ein weiterer Vorteil besteht darin, dass Diagnosedaten direkt aus der Hauskommunikationsanlage 10 abgerufen werden können, ohne dass eine Internetverbindung zur entfernten Datenverarbeitungseinheit 30 erforderlich ist. Dies umfasst beispielsweise Statusmeldungen, Fehlermeldungen oder andere betriebsrelevante Informationen, die unmittelbar vor Ort analysiert werden können. So kann der Benutzer gezielt Probleme identifizieren und Maßnahmen ergreifen, ohne auf externe Server oder eine Cloud-Anbindung angewiesen zu sein. Darüber hinaus bietet das System eine optionale Synchronisation der Konfiguration mit einer entfernten Datenverarbeitungseinheit, sobald eine Internetverbindung zur Verfügung steht.

Durch diese Kombination aus lokaler und optionaler zentraler Verwaltung ergibt sich eine besonders hohe Flexibilität, da sowohl eine vollständig autarke Konfiguration als auch eine zentrale Verwaltung der Konfigurationsdaten ermöglicht wird. Dies verbessert die Installations- und Wartungsprozesse, reduziert potenzielle Fehlkonfigurationen und bietet eine besonders benutzerfreundliche Lösung für die Einrichtung und Instandhaltung von Hauskommunikationsanlagen.

Figur 4 zeigt ein Ablaufdiagramm, das die Schritte eines Verfahrens zur lokalen Konfiguration einer Hauskommunikationsanlage 10 veranschaulicht. Das dargestellte Verfahren umfasst verschiedene Schritte, die in einer sinnvollen Reihenfolge ablaufen können. Die dargestellten Schritte können in der angegebenen Reihenfolge oder in abgewandelter Reihenfolge ausgeführt werden, und einzelne Schritte können optional entfallen oder durch funktional äquivalente Maßnahmen ersetzt werden. Zudem ist es möglich, dass die in der vorliegenden Anmeldung beschriebenen Vorrichtungen und Verfahrensschritte in beliebiger Weise miteinander kombiniert werden, sofern dies technisch sinnvoll ist.

Das Verfahren beginnt mit Schritt S1, in dem eine eindeutige Identifikation eines physischen Hauskommunikationsendgerät 11-13 der Hauskommunikationsanlage 10 erfasst wird. Die Identifikation erfolgt über die Eingabeeinrichtung 21 des mobilen Endgeräts 20, wobei verschiedene Methoden wie das optische Scannen eines QR-Codes oder das elektronische Auslesen einer RFID- oder NFC-Kennung genutzt werden können.

In Schritt S2 wird das erfasste Hauskommunikationsendgerät 11-13 in der mobilen Anwendung auf dem mobilen Endgerät 20 registriert und kann dort weiter konfiguriert werden. Je nach erkanntem Hauskommunikationsendgerät kann die Anwendung eine entsprechende Benutzeroberfläche zur Konfiguration bereitstellen, in der verschiedene Parameter definiert werden können.

Anschließend folgt Schritt S3, in dem eine Konfiguration, beispielsweise eine Konfigurationsdatei, basierend auf den eingegebenen Konfigurationsdaten erstellt wird. Diese Konfiguration enthält alle relevanten Informationen zur Einrichtung der Hauskommunikationsanlage 10 und kann für die spätere Übertragung an die physischen Hauskommunikationsendgeräte 11-13 genutzt werden.

In Schritt S4 wird die erstellte Konfiguration an die Hauskommunikationsanlage 10 übertragen. Dies kann auf direktem Weg über eine drahtlose Verbindung zwischen dem mobilen Endgerät 20 und mindestens einem Hauskommunikationsendgerät 11-13 der Hauskommunikationsanlage 10, insbesondere über WLAN oder Bluetooth, erfolgen. Alternativ kann die Konfiguration zunächst in einer zentralen Datenverarbeitungseinheit 30 gespeichert und von dort zu einem späteren Zeitpunkt an die Hauskommunikationsanlage 10 übermittelt werden, sofern eine Datenverbindung besteht.

Die Erfindung betrifft ein Verfahren und ein mobiles Endgerät zur lokalen Konfiguration einer Hauskommunikationsanlage mit einer Mehrzahl physischer Hauskommunikationsendgeräte. Eine eindeutige Identifikation eines Hauskommunikationsendgeräts wird mittels einer mobilen Anwendung auf einem mobilen Endgerät erfasst. In der Anwendung erfolgt die Konfiguration der erfassten Komponente, wobei eine Konfiguration erstellt wird. Diese wird an die physischen Hauskommunikationsendgeräte der Hauskommunikationsanlage übertragen, sodass die Hauskommunikationsanlage gemäß der Konfiguration eingerichtet wird. Die Übertragung erfolgt drahtlos, insbesondere über WLAN oder Bluetooth. Optional kann die Konfiguration mit einer zentralen Datenverarbeitungseinheit synchronisiert werden, um eine spätere Fernkonfiguration oder Wartung zu ermöglichen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Verfahren zur lokalen Konfiguration einer Hauskommunikationsanlage (10) mittels einer mobilen Anwendung auf einem mobilen Endgerät (20), umfassend die Schritte:
Erfassen (S1) einer eindeutigen Identifikation eines physischen Hauskommunikationsendgeräts (11-13) einer Hauskommunikationsanlage (10) mit einer Mehrzahl physischer Hauskommunikationsendgeräte (11-13) mittels des mobilen Endgeräts (20);
Durchführen (S2) einer Konfiguration des erfassten physischen Hauskommunikationsendgerät (11-13) in der mobilen Anwendung;
Erstellen (S3) einer Konfiguration basierend auf den in der mobilen Anwendung eingegebenen Konfigurationsdaten;
Übertragen (S4) der erstellten Konfiguration auf die miteinander vernetzten physischen Hauskommunikationsendgeräte der Hauskommunikationsanlage (10).

2. Verfahren nach Anspruch 1,
**dadurch gekennzeichnet,**
**dass** die eindeutige Identifikation des Hauskommunikationsendgeräts (11-13) durch mindestens eine der folgenden Methoden erfasst wird:
- optisch durch Erfassen eines QR-Codes oder Barcodes;
- elektronisch durch Auslesen einer RFID- oder NFC-Kennung;
- manuell durch Eingabe eines Identifikationscodes, insbesondere einer Seriennummer.

3. Verfahren nach einem der vorstehenden Ansprüche,
**dadurch gekennzeichnet,**
**dass** die Übertragung der Konfigurationsdaten an das Hauskommunikationsendgerät (11-13) der Hauskommunikationsanlage (10) über mindestens eine der folgenden Methoden erfolgt:
- über eine drahtlose Verbindung zwischen dem mobilen Endgerät (20) und mindestens einem Hauskommunikationsendgerät (11-13) der Hauskommunikationsanlage (10), insbesondere über WLAN oder Bluetooth, wobei das Hauskommunikationsendgerät (11-13) die Konfigurationsdaten an weitere Hauskommunikationsendgeräte (11-13) der Hauskommunikationsanlage (10) weiterleiten kann;
- über eine Netzwerkverbindung zu einer zentralen Datenverarbeitungseinheit (30), die die Konfigurationsdaten an die Hauskommunikationsanlage (10) weiterleitet.

4. Verfahren nach einem der vorstehenden Ansprüche,
**dadurch gekennzeichnet,**
**dass** das Verfahren einen Schritt zum Hochladen gespeicherter Konfigurationsdaten an eine zentrale Datenverarbeitungseinheit (30) bei bestehender Datenverbindung umfasst.

5. Verfahren nach einem der vorstehenden Ansprüche,
**dadurch gekennzeichnet,**
**dass** das Verfahren einen Schritt zum Abrufen von Konfigurationsdaten aus einer zentralen Datenverarbeitungseinheit (30) bei bestehender Datenverbindung umfasst, wobei die abgerufenen Konfigurationsdaten lokal gespeichert werden und bei Bedarf bearbeitet und an die Hauskommunikationsanlage (10) übertragen und/oder erneut in die zentrale Datenverarbeitungseinheit (30) hochgeladen werden.

6. Verfahren nach einem der vorstehenden Ansprüche,
**dadurch gekennzeichnet,**
**dass** die mobile Anwendung nach der Identifikation eines physischen Hauskommunikationsendgeräts (11-13) den zugehörigen Hauskommunikationsendgerätetyp anhand einer in der Anwendung gespeicherten Datenbank ermittelt und basierend darauf Konfigurationsparameter, Standardwerte und/oder weitere für die Konfiguration relevante Informationen bestimmt.

7. Verfahren nach einem der vorstehenden Ansprüche,
**dadurch gekennzeichnet,**
**dass** die mobile Anwendung nach der Identifikation eines Hauskommunikationsendgeräts (11-13) den zugehörigen Hauskommunikationsendgerätetyp aus einer externen Datenquelle, insbesondere der zentralen Datenverarbeitungseinheit, abruft und basierend darauf Konfigurationsparameter, Standardwerte und/oder weitere für die Konfiguration relevante Informationen bestimmt.

8. Verfahren nach einem der vorstehenden Ansprüche,
**dadurch gekennzeichnet,**
**dass** die Übertragung der Konfigurationsdaten an ein Hauskommunikationsendgerät der Hauskommunikationsanlage (14) erst nach einer Autorisierung erfolgt, wobei die Autorisierung durch mindestens eine der folgenden Maßnahmen erfolgt:
- die Eingabe eines Sicherheitscodes, der in eines Hauskommunikationsendgeräts der Hauskommunikationsanlage hinterlegt ist;
- die Betätigung eines mechanischen Freigabeelements an einem Hauskommunikationsendgerät der Hauskommunikationsanlage;
- eine netzwerkbasierte Authentifizierung über eine lokale oder externe Datenverbindung.

9. Verfahren nach einem der vorstehenden Ansprüche,
**dadurch gekennzeichnet,**
**dass** das mobile Endgerät (20) nach der Verbindung mit der Hauskommunikationsanlage (10) aktuelle Konfigurationsdaten aus einer Mehrzahl Hauskommunikationsendgeräte (11-13) der Hauskommunikationsanlage (10) ausliest.

10. Verfahren nach Anspruch 9,
**dadurch gekennzeichnet,**
**dass** das mobile Endgerät (20) die ausgelesenen Konfigurationsdaten analysiert und auf Grundlage der Analyse mögliche Fehler im Betrieb der Hauskommunikationsanlage (10) identifiziert.

11. Verfahren nach einem der vorstehenden Ansprüche,
**dadurch gekennzeichnet,**
**dass** das mobile Endgerät (20) zusätzlich Software- oder Firmware-Versionen aus mindestens einem Hauskommunikationsendgerät (11-13) der Hauskommunikationsanlage (10) ausliest, diese mit einer Referenz vergleicht und basierend darauf ein Update vorschlägt oder ausführt.

12. Verfahren nach einem der vorstehenden Ansprüche,
**dadurch gekennzeichnet,**
**dass** die mobile Anwendung nach der Identifikation eines Hauskommunikationsendgeräts die erfasste Identifikation an eine zentrale Datenverarbeitungseinheit (30) überträgt, um dort ein entsprechendes digitales Abbild des Hauskommunikationsendgeräts zu erstellen und zu konfigurieren.

13. Mobiles Endgerät (20) zur lokalen Konfiguration eines Hauskommunikationsendgerätes (11-13) und/oder einer Hauskommunikationsanlage (10) mit einer Mehrzahl physischer Hauskommunikationsendgeräte (11-13),
mit einer Eingabeeinrichtung (21), die dazu ausgelegt ist, eine eindeutige Identifikation eines physischen Hauskommunikationsendgerät (11-13) der Hauskommunikationsanlage (10) zu erfassen,
mit einer Verarbeitungseinheit (22), die dazu ausgelegt ist, basierend auf Benutzereingaben Konfigurationsdaten für das erfasste Hauskommunikationsendgerät (11-13) zu generieren und zu speichern, und
mit einer Datenübertragungseinheit (23), die dazu ausgelegt ist, die gespeicherten Konfigurationsdaten an die miteinander vernetzten Hauskommunikationsendgeräte (11-13) der Hauskommunikationsanlage (10) zu übertragen.

14. Mobiles Endgerät nach Anspruch 13,
**dadurch gekennzeichnet,**
**dass** das mobile Endgerät (20) dazu ausgebildet ist, eine Sicherheitsautorisierung vor der Konfigurationsübertragung durchzuführen, indem Sicherheitsinformationen von einem Hauskommunikationsendgerät (11-13) der Hauskommunikationsanlage (10) abgefragt und verifiziert werden.

15. System zur Konfiguration einer Hauskommunikationsanlage (10), insbesondere unter Verwendung eines Verfahrens nach einem der Ansprüche 1 bis 13, wobei das System aufweist:
eine Mehrzahl physischer Hauskommunikationsendgeräte (11-13) einer Hauskommunikationsanlage (10), die über eine Kommunikationsverbindung (15) miteinander gekoppelt sind,
eine zentrale Datenverarbeitungseinheit (30), die zur Speicherung und Verwaltung von Konfigurationsdaten ausgebildet ist,
ein mobiles Endgerät (20), insbesondere ein mobiles Endgerät (20) nach einem der Ansprüche 13 oder 14,
- wobei das mobile Endgerät (20) zur lokalen Konfiguration der physischen Hauskommunikationsendgeräte der Hauskommunikationsanlage (10) ausgebildet ist,
- wobei das mobile Endgerät (20) dazu ausgebildet ist, Konfigurationsdaten für die physikalischen Hauskommunikationsendgeräte (11-13) zu erfassen, zu bearbeiten und die bearbeiteten Konfigurationsdaten entweder unmittelbar auf die physischen Hauskommunikationsendgeräte der Hauskommunikationsanlage (10) zu übertragen oder in der zentralen Datenverarbeitungseinheit (30) zu speichern und später zu synchronisieren.
